# EUROPEAN PATENT SPECIFICATION

(11) **EP 2 647 095 B1**
(45) Date of publication and mention of the grant of the patent: **27.08.2014**
(21) Application number: 11782747.7
(22) Date of filing: 08.11.2011
(51) Int. Cl.: H02G 15/007

(54) **STRAIN RELIEF DEVICE**
ZUGENTLASTUNGSVORRICHTUNG
DISPOSITIF RÉDUCTEUR DE TENSION

(30) Priority: 29.11.2010 US 417562 P
(43) Date of publication of application: 09.10.2013
(73) Proprietor: 3M Innovative Properties Company, Saint Paul, MN 55133-3427 (US)
(72) Inventor: PIMENTEL, Nelson Goncalves, D-41453 Neuss (DE)
(74) Representative: Vossius & Partner
(86) International application number: PCT/US2011/059752
(87) International publication number: WO 2012/074684

(56) References cited:
- WO-A1-2004/077620
- DE-U1-202008 004 614
- US-A- 4 723 053
- US-A- 5 675 128
- US-B1- 6 233 791

## Description

### BACKGROUND

### Field of the Invention

The present invention generally relates to a strain relief device for telecommunication cables, and more particularly to a strain relief device having a defined external geometry to allow mounting in a standard telecommunication patch panel.

### Description of the Related Art

Cables, such as telecommunication cables and electrical power distribution cables, are ubiquitous and used for distributing electrical power and all manner of data signals across vast networks. The majority of cables are electrically conductive cables (typically copper), although the use of optical fiber cables is growing rapidly in telecommunication systems as larger and larger amounts of data are transmitted. As cables are routed across power or data networks, it is necessary to periodically open, connect, or splice the cable so that power or data may be distributed to other cables or "branches" of the network. The cable branches may be further distributed until the network reaches individual homes, businesses, offices, and so on.

At each point where the cable is opened, it is necessary to protect the exposed interior of the cable. Commonly, a telecommunication enclosure, rack, or cabinet is used that has one or more entry portions through which cables enter and/or exit the enclosure. The capacity of the enclosure will vary depending upon the number of entry portions in the enclosure, the sizes of the entry portions, the number of cables entering the enclosure, and the sizes and number of cables passing through each entry portion will vary. Often, when smaller diameter cables are used in distribution lines, multiple cables are bundled for placement through a single entry portion.

Many telecommunication enclosures, racks and cabinets include a standard telecommunication patch panel for making service connections through either connector-socket type of connection or through a connector-to-connector connection utilizing a standard adapter such as an SC format adapter used to interconnect to SC style connectors in an optical network.

Traditionally, if telecommunication cables need to be routed in to a telecommunication enclosure or cabinet, specialized cable entrance ports are used. Alternatively, an opening can be formed in the telecommunication enclosure or cabinet by removing a knock-out blank or drilling a hole to allow passage of the cable. A supplemental cable holder or strain relief device is then inserted through the opening to support the telecommunication cable.

WO 2010/102657 discloses a cable bracket that provides strain relief to a fiber optic cable installed in a fiber optic cable management system. The strain relief device comprises a single piece base body and at least one clamping element, wherein the base body comprises at least one through hole for guiding at least one fiber optic cable and extending from a front side of the base body to a rear side of the base body, wherein a header part having at least one slit is disposed on the rear side of the base body and at least one deflecting element is disposed at an outer surface of the base body, wherein the clamping element is releasably connected to the base body

US 2010/0092147 discloses an optical fiber cable retention device to be inserted into cable retention structures or slots disposed in a wall of a fiber distribution box. The optical fiber cable retention device includes a body having first and second opposing portions and a hinge disposed therebetween to retain an optical fiber cable when the optical fiber cable retention device is placed in a closed position. The first and second body portions are engageable with one another about the hinge. At least one of the first and second body portions includes a flexible wall portion configured to provide a retention force to an outer jacket of the fiber cable. At least one of the first and second body portions includes a strength member retention area having one or more structures configured to engage a strength member of the optical fiber cable. The optical fiber cable retention device also includes a latching mechanism to secure the device in the closed position. The document DE 202008004614 U1 discloses a strain relief device.

CLEC's (competitive local exchange carriers) and ILEC's (incumbent local exchange carriers) desire a means of securing and protecting small diameter telecommunication cables and/or drop cables from damaging external forces such as external tensile forces or external shear forces. Additionally, a design that is easier to use and compatible with industry standard mounting structures is desired in order to save training and installation time for the installers.

### SUMMARY

The present invention is directed to a strain relief device for use in a telecommunication enclosure to provide strain relief to one or more telecommunication cables passing through an industry standard mounting structure.

The exemplary strain relief device has a rectangular tubular body having an internal strength member securing section disposed within a cable channel in the rectangular tubular body and a pair of clips to secure the strain relief device into an opening in a standard telecommunication mounting structure. The rectangular tubular body comprises a base and a cover that is attachable to the base. The base of the strain relief device includes an outer surface and an inner surface wherein the inner surface defines a cable channel extending between a first end of the base and a second end of the base. The clips can be disposed on opposite sides of the outer surface of the base.

In one exemplary embodiment, the cover is pivotally attached to the base by a hinge while in an alternative embodiment the cover is attached to the base by at least one mechanical fastener or latch.

Any of the previously described strain relief devices can be configured to hold two telecommunication cables in a side-by-side parallel orientation within the cable channel that extends through the rectangular tubular body. In some exemplary aspects, the internal strength member holding section can comprise a center divider disposed within the cable channel such that it would be disposed between the two telecommunication cables held within the strain relief device. The central divider can interact with the cover such that the strength members of a telecommunication cable are clamped to the strain relief device when the cover is secured to the base.

In some exemplary embodiments, the rectangular tubular body is symmetric around a midplane of the strain relief device.

In an exemplary aspect, the rectangular tubular body of any of the previously described strain relief devices can be configured to have the same dimensions and shape as a standard SC-format optical connector coupling. In an alternative exemplary aspect, the rectangular tubular body of any of the previously described strain relief devices can be configured to have the same dimensions and shape as a standard LC-format optical connector coupling, while in yet another alternative exemplary aspect, the rectangular tubular body of any of the previously described strain relief devices can be configured to have the same dimensions and shape as a standard RJ-11 or RJ-45 receptacle.

Any of the previously described strain relief devices can also include a pair of abutment ridges formed on the outer surface of two opposite sides of the rectangular tubular body to facilitate mounting the retention device in an industry standard mounting structure.

### BRIEF DESCRIPTION OF THE DRAWINGS

The present invention will be further described with reference to the accompanying drawings, wherein:
Fig. 1A is an isometric view of a first exemplary embodiment of a strain relief device according to an aspect of the invention;
Fig. 1B is an isometric view of the base of the exemplary strain relief device of Fig. 1A;
Figs. 1C and 1D are two isometric views of the cover of the exemplary strain relief device of Fig. 1A;
Figs. 2A-2C are three isometric views of a second exemplary embodiment of a strain relief device according to an aspect of the invention;
Fig. 3 is an isometric view of an alternative arrangement of the telecommunication cables within an exemplary embodiment of a strain relief device according to an aspect of the invention;
Figs. 4A-4C shows an exemplary assembly technique of a strain relief device according to an aspect of the invention;
Figs. 5A-5C shows an alternative exemplary assembly technique of a strain relief device according to an aspect of the invention;
Fig. 6 is an isometric view of an exemplary strain relief device according to an aspect of the invention mounted in a mounting structure.
Fig. 7 is an isometric view of an exemplary strain relief device according to an aspect of the invention mounted in an alternative mounting structure.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the invention as defined by the appended claims.

### DETAILED DESCRIPTION

In the following Detailed Description, reference is made to the accompanying drawings, which form a part hereof, and in which is shown by way of illustration specific embodiments in which the invention may be practiced. In this regard, directional terminology, such as "top," "bottom," "front," "back," "leading," "forward," "trailing," etc., is used with reference to the orientation of the Figure(s) being described. Because components of embodiments of the present invention can be positioned in a number of different orientations, the directional terminology is used for purposes of illustration and is in no way limiting. It is to be understood that other embodiments may be utilized and structural or logical changes may be made without departing from the scope of the present invention.

The present invention is directed to a strain relief device to be mounted in a standard mounting structure used in telecommunication enclosures, racks and cabinets. The mounting structure can be a patch panel, wall of an enclosure, or partition configured to accept an industry standard connection receptacles and/or couplings, such as an RJ connector socket or receptacle, or a SC or LC format optical connector coupling. Mounting structures of these types generally have openings to accept industry standard connection receptacles or couplings. These industry standard connection receptacles or couplings accept terminated telecommunication cables, i.e. telecommunication cables having a connector mounted on the terminal end of the cable. The connector can be plugged in to the industry standard connection receptacles or couplings to make a connection with signal carriers (e.g. wires or terminated optical fibers) disposed on the opposite side of the mounting structure.

Exemplary telecommunication cables can be small diameter cables designed to carry telecommunication signals such as optical fiber drop cables, low fiber count optical fiber cables, electrical cables such as low pair count telecommunication drop cables, ethernet cables, or micro-coax cables or small diameter optical/electrical hybrid cables, etc. In particular, the exemplary strain relief devices can be used in conjunction with cables having flexible strength members.

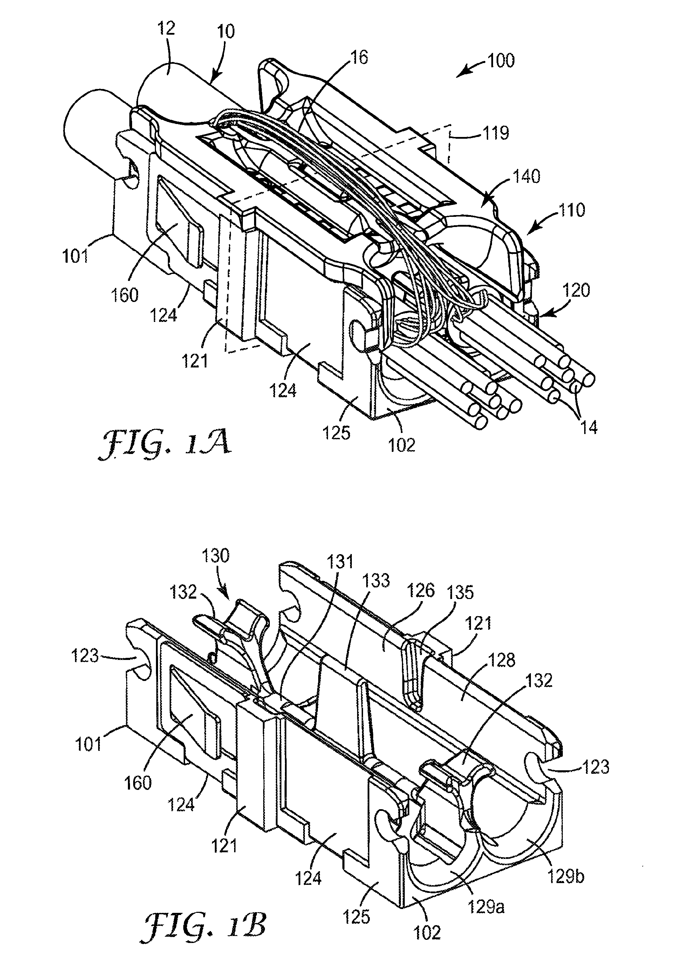

As described herein, the exemplary strain relief devices are depicted for use with optical fiber telecommunication cables, although it is understood that the exemplary devices may be used with other telecommunication types without departure from the invention. An exemplary optical fiber cable 10, as shown for example in Figs. 1A, 2A, 4A, and 5A, has an outer jacket 12 surrounding one or more optical fibers 14 and one or more flexible strength members 16. Typical optical fiber cables can be optical fiber drop cables or low fiber count fibers having between one and 8 optical fibers or can be relatively low count fiber cables having 8, 12, or more optical fibers contained within the cable's outer jacket. The optical fibers can be disposed individually within a loose buffer tube or in the form of an optical fiber ribbon(s). In some exemplary cables, the optical fibers can reside in the buffer tube surrounded by a water-blocking gel or grease. Each optical fiber has a polymeric coating that surrounds and protects the glass fiber. The flexible strength members can be aramid or metallic strength members or glass yarn. Aramid strength members can be in the form of a floss, a yarn, a braid, or a string. Metallic strength members can be in the form of a wire, a braid, a foil or a thin elongated strip.

Fig. 1A illustrates a first exemplary embodiment of a strain relief device 100. The exemplary strain relief device has a rectangular tubular body 110 having a base 120 and a cover 140 that is attachable to the base. The base of the strain relief device includes an outer surface 125 and an inner surface 126 (Fig. 1B), wherein the inner surface defines a cable channel 128 extending between a first end 101 of the base and a second end 102 of the base.

Strain relief device 100 shown in Fig. 1A has two telecommunication cables, (e.g. optical fiber cables 10) installed therein. The optical fiber cables shown each contain eight optical fibers 14 and a plurality of aramid strength members 16 within cable jacket 12. In an alternative aspect, each of optical fiber cables can have more or less than eight optical fibers. In the exemplary strain relief device, shown in Fig. 1A, two optical fiber cables can be held which have a cable diameter between 1 mm and 5 mm. If only a single optical fiber cable is installed, the device is capable of handling a slightly larger diameter cable (e.g. about 6mm). The optical fiber cables shown in Fig 1A have the same approximate diameter. However, the device is capable of holding two different sized cables so long as they fall within the prescribed size range given above.

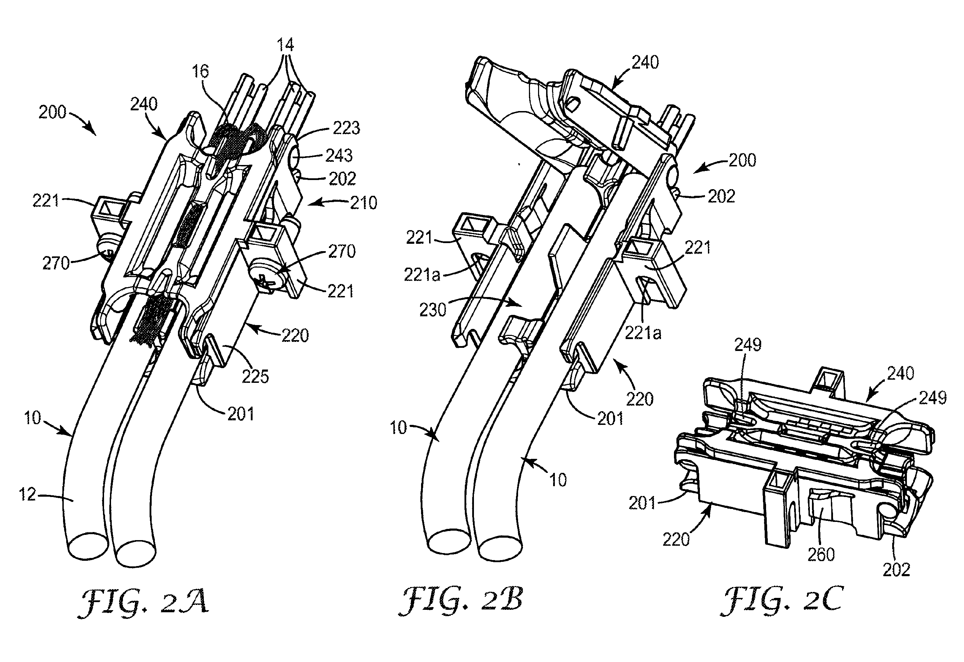

Strain relief device 100 can also include a pair of clips 160 disposed on opposite sides of the outer surface 125 to secure the strain relief device into an opening in a standard telecommunication mounting structure. The clips can be in the form of a separate part that can be fitted into a depression 124 in the outer surface 125 of the base 120 of the rectangular tubular body. Alternatively, clips 260 can be integrally formed with the base 220 of an exemplary strain relief device 200 as shown in Fig. 2C.

In the exemplary aspect as shown in Fig 1A, the rectangular tubular body can be symmetric about its midplane 119 such that the rectangular tubular body includes depressions 124 for accepting a pair of clips proximate to both the first and second ends 101, 102 of the strain relief device. In an exemplary aspect the pair of clips can be formed as a single piece joined by a spanning section (not shown). Thus, the pair of clips can be in the form of a clasp that secures the clips to the rectangular tubular body without additional means of fixation. In an alternative aspect, the pair of clips could be attached to the rectangular tubular body via an interference fit of each clip 160 within its respective depression 124. In another alternative aspect, the clips can be connected to the rectangular tubular body by a mechanical fastening method such as a mechanical fastener (e.g. a screw or staple), mechanical interlocking means such as a projection formed on at least one of the clip or within the depression 124 that lock into a hole or other mating structure formed in the other of the depression or the clip, or the clips could be slid into slots formed along two opposite sides of the depressions. Finally, the clips could be adhesively bonded within the depressions to secure them to the rectangular tubular body.

In one exemplary embodiment, the cover is pivotally attached to the base by a hinge which can include hinge pin 143 disposed on cover 140 that fits into a receptacle 123 on base 120. In an alternative embodiment, the hinge pin can be disposed on the base and the receptacle can reside on the cover. While the exemplary strain relief device shown in Fig 1A shows the hinge disposed at the second end of the rectangular tubular body, the hinge could be located at either end of the device or could be located along one of the longitudinal edges of base and cover. In yet another exemplary aspect the cover may be slidably attached to the base. In this aspect one of the cover or base could have a set of rails running along their longitudinal edged. These rails could be slidably engageable with a channel or track formed along the longitudinal edges of the other of the base and cover, respectively.

In yet another alternative embodiment, the cover can be attached to the base by at least one mechanical fastener such as a centrally located screw or latch or by one or more latches disposed on opposite longitudinal edges of the splice device.

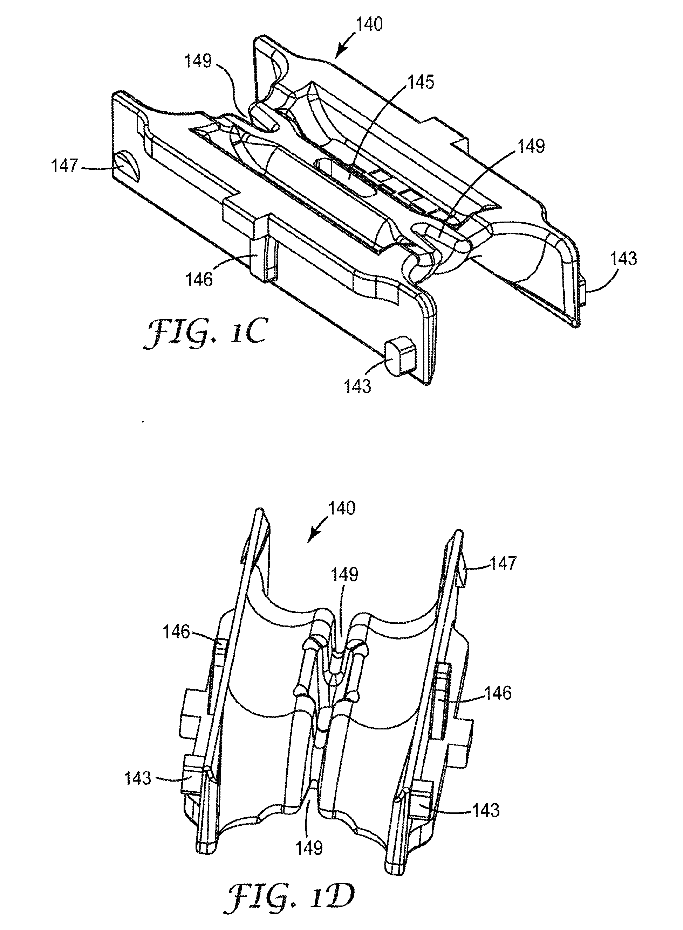

Fig. 1B shows a detailed view of base 120 that can be used in conjunction with cover 140, which is shown in detail in Figs 1C and 1D to form the rectangular tubular body 110 of strain relief device 100. The base can include a pair of abutment ridges 121 formed on the outer surface 125 on at least two sides of the rectangular tubular body to facilitate mounting the retention device in an industry standard mounting structure.

An internal strength member securing section 130 (Fig. 1B) is disposed within the base 120 of the strain relief device. In some exemplary aspects, the internal strength member holding section can comprise a center divider 131 disposed within cable channel 128 forming two discrete cable passages 129a, 129b. As such, the center divider would be disposed between two telecommunication cables when they are installed in the strain relief device. The central divider can interact with the cover such that the strength members of a telecommunication cable are clamped to the strain relief device when the cover is secured to the base.

The center divider 131 can include one or more strength member guides 132 and a locking element 133 extending vertically from the center divider. The strength member guides serve to gather and align the strength members of the telecommunication cable with the locking element so that they will be clamped by the locking element when the cover is attached to the base. The strength member guides 132, shown in Fig. 1B, have a modified wish bone or modified Y-shape. The locking element 133 is adapted to mate with an opening 145 (Fig. 1C) in cover 140 to securely capture at least a portion of the strength members of the telecommunication cables positioned in the strain relief device.

Base 120 can be longitudinally symmetric as shown in Fig 1B where in the strength member guides 132 and the locking element 133 are disposed along the longitudinal midline of the device. Base 120 can have a receptacle 123 formed in each side wall of the base at both the first end 101 and the second end 102 of the base. A first pair of receptacles disposed on one of the first end or the second end can be used to mate with the hinge pins 143 on cover 140 (Fig. 1 C) as previously mention. The other pair of receptacles located on the end opposite that being used for the cover's hinge pins can mate with catches 147 (Figs. 1C-1D) on the end of the cover opposite the hinge pins. The catches can lock the cover in a closed position when they are received in receptacles 123. In an alternative embodiment the hinge pins on the cover can be replaced with a second set of catches for a snap-fit style cover which is secured in place by the mating of the four catches on the cover with the four receptacles on the base.

In addition, base 120 can have a pair of guide slots 135 formed in the inside surface 126 along each longitudinal edge of the base that receive guides 146 (Fig 1D) on cover 140 to ensure proper positioning of the cover when it is attached to base 120.

In an alternative aspect cover 140 can have a pair of slots 149 formed on the longitudinal centerline of the cover. These slots can be used to align the strength members with the locking element on the base by wrapping the strength members around the cover.

The base and cover of the exemplary strain relief device can be formed by injection molding from a rigid material such as a rigid engineering plastic or glass filled polymer. Exemplary materials can include a polycarbonate material such as LEXAN® 500 Resin available from SABIC Innovative Plastics (Pittsfield, MA), MAKROLON ® 2405 FBL Polycarbonate Resin available from Bayer Material Science LLC (Pittsburg, PA), MAKROLON® 9415 Polycarbonate Resin - Flame-Retardant, 10% Glass-Fiber-Reinforced Grade available from Bayer Material Science LLC (Pittsburg, PA),or a blend of semi-crystalline polyesters such as a XENOY® resin both available from SABIC Innovative Plastics (Pittsfield, MA).

Any of the previously described strain relief devices can be configured to hold two telecommunication cables in a side-by-side parallel orientation within the cable channel (i.e. one cable an be held in each cable passage). In some exemplary aspects, the internal strength member holding section can comprise a center divider disposed within cable channel such that it would be disposed between the two telecommunication cables held within the strain relief device. The central divider can interact with the cover such that the strength members of a telecommunication cable are clamped to the strain relief device when the cover is secured to the base.

In an exemplary aspect, the rectangular tubular body 110 of strain relief device 100 can be configured to have the same external dimensions and shape as a standard SC-format optical connector coupling. In an alternative exemplary aspect, the strain relief device can be configured to have the same external dimensions and shape as a standard LC-format optical connector coupling. In yet another alternative exemplary aspect, the strain relief device can be configured to have the same external dimensions and shape as a standard RJ-11 or RJ-45 receptacle.

An alternative embodiment of an exemplary strain relief device 200 is shown in Figs. 2A-2C. Strain relief device 200 has a rectangular tubular body 210 having a base 220 and a cover 240 that is attachable to the base. Base 220 of the strain relief device includes an outer surface 225 and an inner surface (not shown) wherein the inner surface defines a cable channel extending between a first end 201 of the base and a second end 202 of the base as described previously.

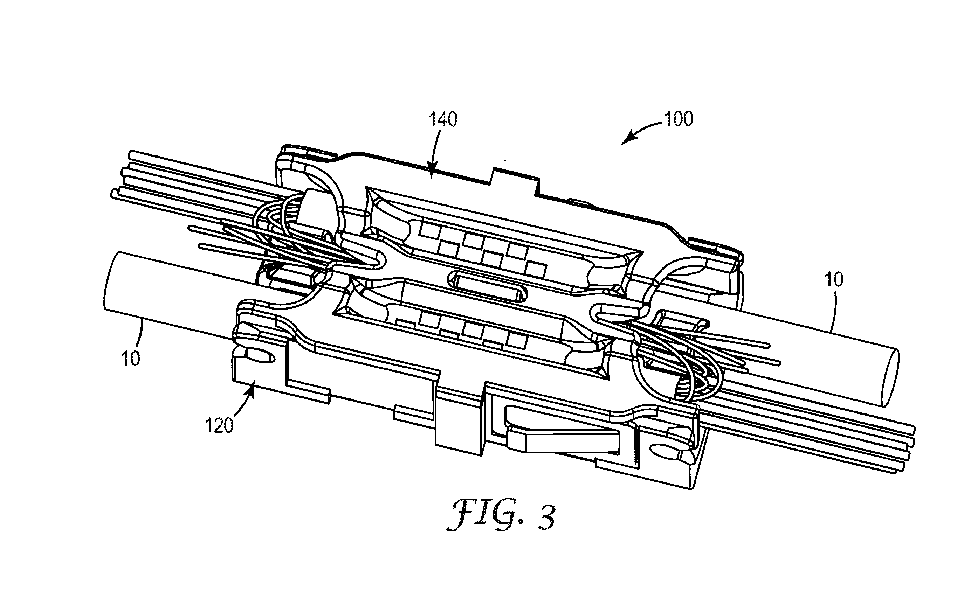

Strain relief device 200 shown in Fig. 2A has two telecommunication cables, (e.g. optical fiber cables 10) installed therein. The optical fiber cables 10 can extend through device 200 in the same direction or can be placed within the strain relief device in opposite directions as shown in Fig. 3. This second arrangement may be particularly useful when cables enter a enclosure, rack, or cabinet from opposite sides thereof and need to be secured before being routed to the trays and devices contained within the enclosure, rack, or cabinet.

Strain relief device 200 includes a pair of integrally formed clips 260, best shown in Fig. 2C, disposed on opposite sides of base 220 to secure the strain relief device into an opening in a standard telecommunication mounting structure.

In this second exemplary embodiment, the cover 240 is pivotally attached to the base 220 by a hinge which can include hinge pin 243 disposed on cover 240 that fits into a receptacle 223 on the base. Fig. 2A shows the over in a closed and secured position while Fig. 2B shows the cover in a canted or open position.

Base 220 includes a pair of abutment ridges 221 formed on the outer surface 225 on at least two sides of the base to facilitate mounting the retention device in an industry standard mounting structure. The abutment ridges include a hole 221a (Fig. 2B) to allow the insertion of a mechanical fastener, such as screw 270 (Fig. 2A), therethrough to allow a more rigid connection between the strain relief device and the mounting surface to which the strain relief device is attached.

An internal strength member securing section 230 within base 220 is similar to that previously described.

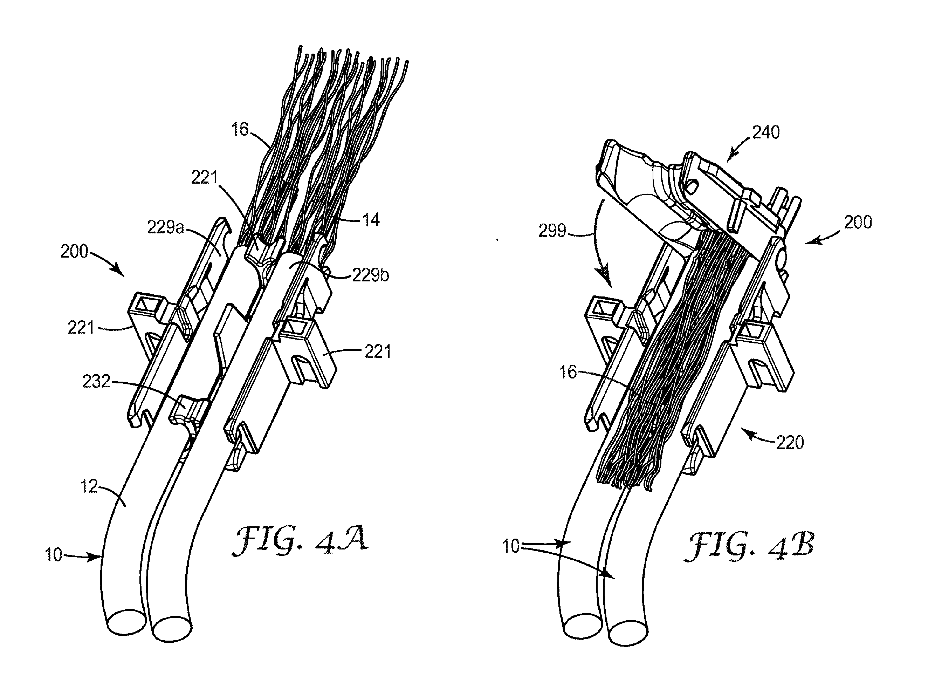

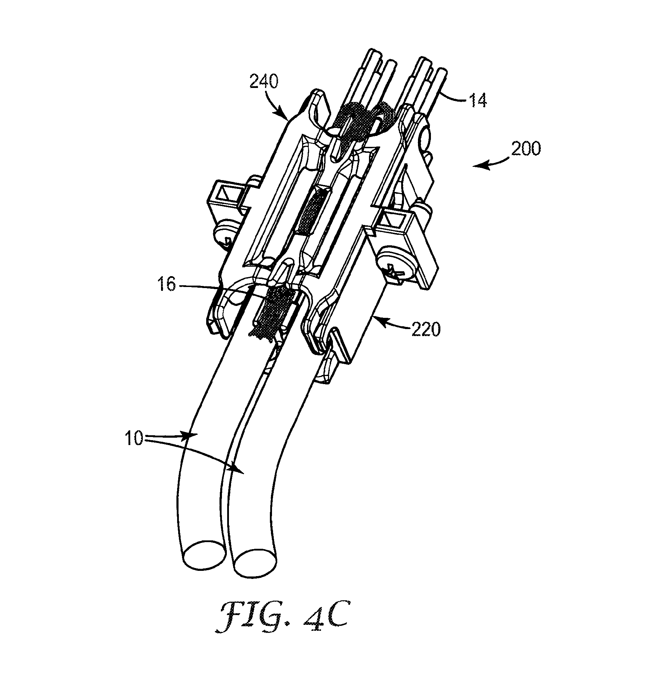

Figs. 4A-4C illustrate a first assembly process for installing two optical fiber cables 10 into an exemplary strain relief device 200. The optical fiber cables are prepared by removing the cable jacket from a portion of the optical fiber cable to expose the strength members and optical fibers contained therein. If the section of the jacket is located at a mid-span location or is a window cut, the strength members are cut so that they can be extracted from the optical fiber cable facilitating attachment of the strength members to the exemplary strain relief device. Each optical fiber cable is positioned in one of the cable passages 229a, 229b as shown in Fig. 4A. The strength members 16 of the optical fiber cables 10 are folded over the strength member guides 232 and the cover 240 is attached to the base 220 by the hinge as shown in Fig 4B. The cover 240 is closed (as designated by direction arrow 299) and secured to the base 220 to clamp the strength members 16 between the strength member securing section in the base and the cover 240 of strain relief device 220 as shown in Fig. 4C. The strength members can then be trimmed outside of the strain relief device to give a neat appearance. While this process is shown for installing two optical fibers in strain relief device, it can also be used when installing a single optical fiber cable within the device.

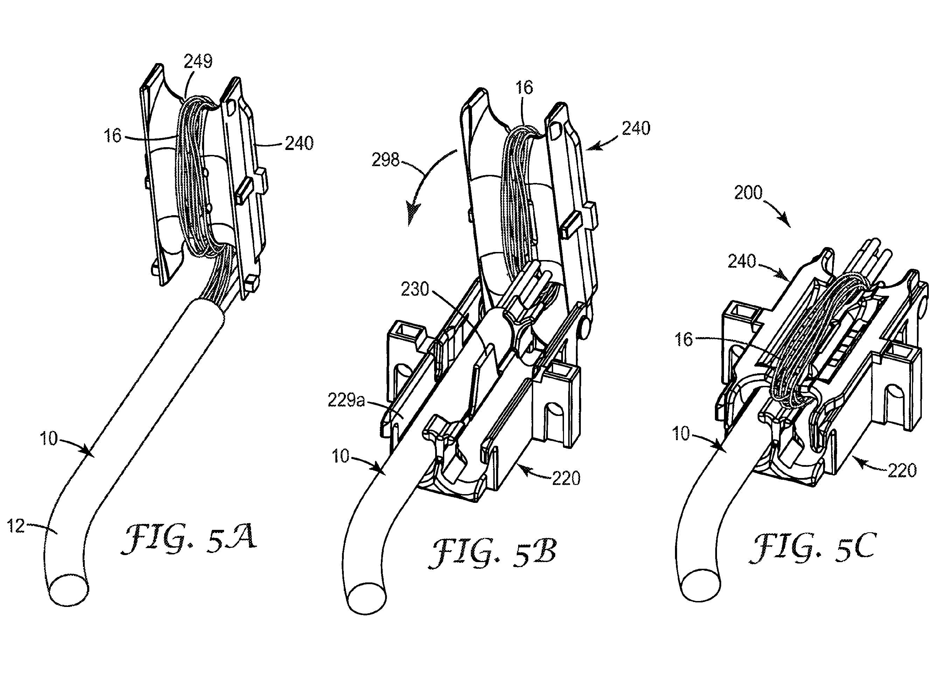

Figs. 5A-5C illustrate a second assembly process for installing an optical fiber cable 10 into an exemplary strain relief device 200. The optical fiber cable is prepared by removing the cable jacket from a portion of the optical fiber. The strength members 16 are extracted from optical fiber cable 10 and wrapped around cover 240 by positioning the strength members in slots 249 (best seen in Fig. 2C) in the cover as shown in Fig. 5a. The optical fiber cable is positioned in one of the cable passages 229a. The cover 240 is attached to the base 220 by the hinge as shown in Fig 5B. The cover 240 is closed (as designated by direction arrow 298) and secured to the base 220 to clamp the strength members 16 between the strength member securing section 230 (Fig. 5B) in the base and the cover 240 of strain relief device 220 as shown in Fig. 5C. In some aspects, the cover can have an alignment groove on one of its upper and lower surface to facilitate the wrapping of the strength members around the cover and the alignment with the features of the strength member securing section in the base of the exemplary strain relief device.

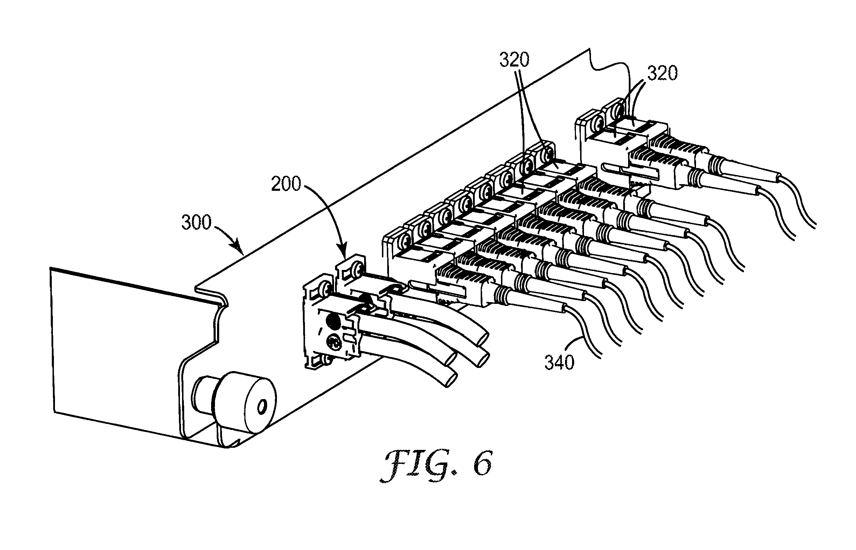

Fig. 6 shows the second exemplary strain relief device 200 mounted in a portion of a first mounting structure 300. The first mounting structure corresponds to an optical fiber patch panel frequently used in an optical fiber distribution frame. The first mounting structure or patch panel may be attached to a standard 0,4826 m (19 inch) equipment rack, a standard 0,5842 m (23 inch) equipment rack or be mounted within a fiber distribution hub. The optical fibers within the optical cables passing through the exemplary strain relief devices are routed to splice trays within the optical fiber distribution frame in order to connect the optical fiber cables to optical devices and equipment, larger optical fiber distribution cables, or preterminated fiber pig tails. In addition to the strain relief devices 200 mounted to the mounting structures, each of which allows two optical fiber cables to pass through the mounting structure, the mounting structure has a plurality of SC optical couplings 320 attached thereto. The optical couplings allow for preterminated optical fibers, cable or patch cords 340 to be attached to the mounting structure 300. The signal path is completed when an optical connector is connected to the optical fiber connector coupling on the back side of the mounting structure.

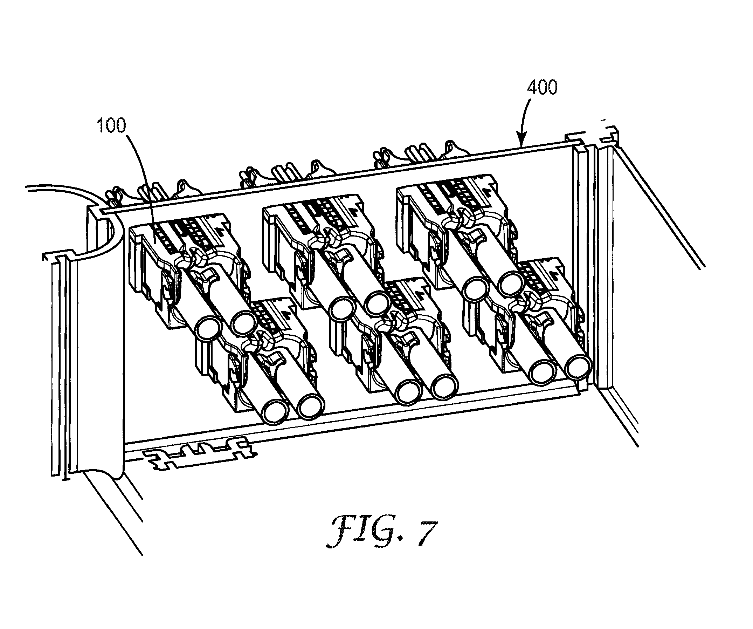

Fig. 7 shows the first exemplary strain relief device 100 according to an aspect of the invention mounted in a second mounting structure 400 within a telecommunications enclosure. Strain relief device 100 provides a high density cable entry field. This is of particular interest for distribution boxes located in medium to large office buildings, hospitals, hotels or apartment buildings where there is a need to route cables to a large number of floors or sections within the building in order to provide service to several locations from a single access point. The exemplary mounting structure can be contained within a demarcation box, a floor distribution box, an in-house distribution box, a wireless demarcation box, or a fiber distribution box for the construction market, or be a cable entrance portion for any telecommunication distribution box.

Alternatively, the exemplary strain relief device can be mounted in a NID or other small distribution enclosure for application in smaller buildings or single family homes.

In some instances, a patch panel can be place in any of the aforementioned telecommunication enclosures to allow optimal cabling and patch cord connections and flexibility. In this case the path panel can be partially populated with the exemplary strain relief devices and the remaining room can have optical fiber connector couplings and/or copper based communication sockets (e.g. RJ style communication receptacles).

The exemplary strain relief device helps to prevent microbending signal losses which can occur when cables are secured in racks, cabinets or enclosures by some conventional methods such as cable ties or by clamping on the outer cable jacket or sheath. The exemplary strain relief device can have the same external dimensions as an industry standard SC or LC optical fiber connector coupling which enables its use in mounting structures used in many premise, central office and data center applications. The exemplary strain relief device can be used to provide a cable connection anywhere there is an appropriately sized patch panel-like cutout providing a flexible cable entry alternative. The removeable cover allows easy installation of the cables into the strain relief device (i.e. no need to insert the stripped cable through a narrow opening or tube). Advantageously, some embodiments of the cable retention devices described herein can be attached to the optical fiber cable prior to making the optical connection (e.g. optical splice), thereby reducing the chance of interfering with the connection by excessive handling of the cable after the splice has been made.

In an alternative aspect, a pair of the exemplary strain relief devices can be used to stabilize an optical fiber cable in which a window cut has been made to access one or more of the optical fibers within the cable. In this application, one of the exemplary strain relief devices is positioned on either side of the window cut. The devices can then be mounted in a small wall box or enclosure positioned over the window cut or mounted to a small frame to stabilize the window cut region of the cable.

Although specific embodiments have been illustrated and described herein for purposes of description of the preferred embodiment, it will be appreciated by those of ordinary skill in the art that a wide variety of alternate or equivalent implementations may be substituted for the specific embodiments shown and described without departing from the scope of the present invention. Those with skill in the art will readily appreciate that the present invention may be implemented in a very wide variety of embodiments. This application is intended to cover any adaptations or variations of the embodiments discussed herein.

## Claims

1. A strain relief device (100) to allow the passage of at least one telecommunication cable therethrough, comprising:
a rectangular tubular body (110) comprising a base (120) and a cover (140) that is attachable to the base (120) wherein the base includes an outer surface (125) and an inner surface (126) wherein the inner surface (126) defines a cable channel (128) extending between a first end (101) of the base (120) and a second end (102) of the base (120);
an internal strength member securing section (130) disposed within the cable channel (128) ; and
a pair of clips (160) disposed on opposite sides of the outer surface (125) to secure the strain relief device (100) into an opening in a standard telecommunication mounting structure,
wherein the at least one telecommunication cable (10) is an optical fiber telecommunication cable having an outer jacket (12) surrounding one or more optical fibers and one or more flexible strength members.

2. The strain relief device (100) of claim 1, wherein the cover (140) is pivotally attached to the base by a hinge (143).

3. The strain relief device (100) of claim 1, wherein the cover (140) is attached to the base by at least one mechanical fastener.

4. The strain relief device (100) of any of the preceding claims wherein the cable channel (128) is configured to hold two optical fiber telecommunication cables in a side-by-side parallel orientation.

5. The strain relief device (100) of claim 4, further comprising a center divider within the cable channel (128) such that it would be disposed between the two optical fiber telecommunication cables held within the strain relief device (100).

6. The strain relief device (100) of any of the preceding claims wherein the internal strength member holding section (130) can comprise a center divider disposed within the cable channel (128) in the base dividing the cable channel into two separate cable passages, wherein each of cable passages which is configured to hold one optical fiber telecommunication cable.

7. The strain relief device (100) of claim 6, wherein the central divider interacts with the cover (140) when it is attached to the base (120) to clamp the strength members of the optical fiber telecommunication cable to the strain relief device (100).

8. The strain relief device (100) of any of the preceding claims further comprising a pair of abutment ridges (121) formed on the outer surface of two opposite sides of the rectangular tubular body (110).

9. The strain relief device (100) of any of the preceding claims, wherein the rectangular tubular body (110) is symmetric around a midplane of the strain relief device (100).

10. The strain relief device (100) of any of the preceding claims, wherein the rectangular tubular body (110) is configured to have the same dimensions and shape as a standard SC-format optical connector coupling.

11. The strain relief device (100) of any of claims 1-9, wherein the rectangular tubular body (110) is configured to have the same dimensions and shape as a standard LC-format optical connector coupling.

12. The strain relief device (100) of any of the preceding claims mounted in a mounting structure.

13. The strain relief device (100) of claim 12, wherein the mounting structure is one of a patch panel and a cable entrance portion of a telecommunication distribution box.

## Patentansprüche

1. Zugentlastungsvorrichtung (100) zum Ermöglichen des Durchgangs mindestens eines Telekommunikationskabels durch sie, welche aufweist:
einen rechteckigen rohrförmigen Körper (110), der ein Unterteil (120) und eine Abdeckung (140), welche an dem Unterteil (120) anbringbar ist, aufweist, wobei das Unterteil eine Außenfläche (125) und eine Innenfläche (126) aufweist, wobei die Innenfläche (126) einen Kabelkanal (128) definiert, der sich zwischen einem ersten Ende (101) des Unterteils (120) und einem zweiten Ende (102) des Unterteils (120) erstreckt;
einen inneren Stützelement-Sicherungsabschnitt (130), der innerhalb des Kabelkanals (128) angeordnet ist; und
ein Paar Federklemmen (160), die auf gegenüberliegenden Seiten der Außenfläche (125) angeordnet sind, um die Zugentlastungsvorrichtung (100) in einer Öffnung in einer standardmäßigen Telekommunikations-Montagestruktur zu befestigen,
wobei das mindestens eine Telekommunikationskabel (10) ein Lichtwellenleiter-Telekommunikationskabel ist, das einen Außenmantel (12) aufweist, der einen oder mehrere Lichtwellenleiter und ein oder mehrere flexible Stützelemente umgibt.

2. Zugentlastungsvorrichtung (100) nach Anspruch 1, wobei die Abdeckung (140) durch ein Gelenk (143) schwenkbar an dem Unterteil angebracht ist.

3. Zugentlastungsvorrichtung (100) nach Anspruch 1, wobei die Abdeckung (140) durch mindestens ein mechanisches Befestigungselement an dem Unterteil angebracht ist.

4. Zugentlastungsvorrichtung (100) nach einem der vorhergehenden Ansprüche, wobei der Kabelkanal (128) dafür ausgebildet ist, zwei Lichtwellenleiter-Telekommunikationskabel in einer parallelen Ausrichtung nebeneinander zu halten.

5. Zugentlastungsvorrichtung (100) nach Anspruch 4, welche ferner einen Mittelteiler innerhalb des Kabelkanals (128) aufweist, derart, dass er zwischen den zwei Lichtwellenleiter-Telekommunikationskabeln angeordnet ist, wenn diese innerhalb der Zugentlastungsvorrichtung (100) gehalten werden.

6. Zugentlastungsvorrichtung (100) nach einem der vorhergehenden Ansprüche, wobei der innere Stützelement-Sicherungsabschnitt (130) einen innerhalb des Kabelkanals (128) in dem Unterteil angeordneten Mittelteiler aufweisen kann, der den Kabelkanal in zwei getrennte Kabeldurchgänge aufteilt, wobei jeder der Kabeldurchgänge dafür ausgebildet ist, ein Lichtwellenleiter-Telekommunikationskabel zu halten.

7. Zugentlastungsvorrichtung (100) nach Anspruch 6, wobei der Mittelteiler mit der Abdeckung (140) interagiert, wenn sie an dem Unterteil (120) angebracht ist, um die Stützelemente des Lichtwellenleiter-Telekommunikationskabels an der Zugentlastungsvorrichtung (100) festzuklemmen.

8. Zugentlastungsvorrichtung (100) nach einem der vorhergehenden Ansprüche, welche ferner ein Paar Anschlagstege (121) aufweist, die auf der Außenfläche zweier gegenüberliegender Seiten des rechteckigen rohrförmigen Körpers (110) ausgebildet sind.

9. Zugentlastungsvorrichtung (100) nach einem der vorhergehenden Ansprüche, wobei der rechteckige rohrförmige Körper (110) symmetrisch bezüglich einer Mittelebene der Zugentlastungsvorrichtung (100) ist.

10. Zugentlastungsvorrichtung (100) nach einem der vorhergehenden Ansprüche, wobei der rechteckige rohrförmige Körper (110) derart ausgebildet ist, dass er dieselben Abmessungen und dieselbe Form wie eine standardmäßige Lichtwellenleiter-Steckkupplung im SC-Format aufweist.

11. Zugentlastungsvorrichtung (100) nach einem der Ansprüche 1-9, wobei der rechteckige rohrförmige Körper (110) derart ausgebildet ist, dass er dieselben Abmessungen und dieselbe Form wie eine standardmäßige Lichtwellenleiter-Steckkupplung im SC-Format aufweist.

12. Zugentlastungsvorrichtung (100) nach einem der vorhergehenden Ansprüche, welche in einer Montagestruktur angebracht ist.

13. Zugentlastungsvorrichtung (100) nach Anspruch 12, wobei die Montagestruktur entweder ein Patch-Panel oder ein Kabeleintrittsabschnitt eines Telekommunikations-Verteilerkastens ist.

## Revendications

1. Dispositif réducteur de tension (100) destiné à permettre le passage d'au moins un câble de télécommunication à travers lui, comprenant :
un corps tubulaire rectangulaire (110) comprenant une base (120) et un recouvrement (140) qui peut être attaché à la base (120), la base comportant une surface externe (125) et une surface interne (126), la surface interne (126) définissant un canal de câble (128) s'étendant entre une première extrémité (101) de la base (120) et une deuxième extrémité (102) de la base (120) ;
une section de fixation d'organe de renforcement interne (130) disposée à l'intérieur du canal de câble (128) ; et
une paire de pinces (160) disposées sur des côtés opposés de la surface externe (125) pour fixer le dispositif réducteur de tension (100) dans une ouverture dans une structure de montage de télécommunication standard,
l'au moins un câble de télécommunication (10) étant un câble de télécommunication à fibres optiques ayant une gaine externe (12) entourant une ou plusieurs fibres optiques et un ou plusieurs organes de renforcement flexibles.

2. Dispositif réducteur de tension (100) selon la revendication 1, dans lequel le recouvrement (140) est attaché de manière pivotante à la base par une charnière (143).

3. Dispositif réducteur de tension (100) selon la revendication 1, dans lequel le recouvrement (140) est attaché à la base par au moins une attache mécanique.

4. Dispositif réducteur de tension (100) selon l'une quelconque des revendications précédentes, dans lequel le canal de câble (128) est configuré de manière à retenir deux câbles de télécommunication à fibres optiques suivant une orientation parallèle côte à côte.

5. Dispositif réducteur de tension (100) selon la revendication 4, comprenant en outre un diviseur central à l'intérieur du canal de câble (128) de telle sorte qu'il soit disposé entre les deux câbles de télécommunication à fibres optiques retenus à l'intérieur du dispositif réducteur de tension (100).

6. Dispositif réducteur de tension (100) selon l'une quelconque des revendications précédentes, dans lequel la section de retenue d'organe de renforcement interne (130) peut comprendre un diviseur central disposé à l'intérieur du canal de câble (128) dans la base divisant le canal de câble en deux passages de câble séparés, chaque passage de câble étant configuré pour retenir un câble de télécommunication à fibres optiques.

7. Dispositif réducteur de tension (100) selon la revendication 6, dans lequel le diviseur central coopère avec le recouvrement (140) lorsqu'il est attaché la base (120) pour serrer les organes de renforcement du câble de télécommunication à fibres optiques contre le dispositif réducteur de tension (100).

8. Dispositif réducteur de tension (100) selon l'une quelconque des revendications précédentes, comprenant en outre une paire d'arêtes de butée (121) formées sur la surface externe de deux côtés opposés du corps tubulaire rectangulaire (110).

9. Dispositif réducteur de tension (100) selon l'une quelconque des revendications précédentes, dans lequel le corps tubulaire rectangulaire (110) est symétrique autour d'un plan médian du dispositif réducteur de tension (100).

10. Dispositif réducteur de tension (100) selon l'une quelconque des revendications précédentes, dans lequel le corps tubulaire rectangulaire (110) est configuré pour avoir les mêmes dimensions et la même forme qu'un couplage de connecteur optique standard au format SC.

11. Dispositif réducteur de tension (100) selon l'une quelconque des revendications 1 à 9, dans lequel le corps tubulaire rectangulaire (110) est configuré pour avoir les mêmes dimensions et la même forme qu'un couplage de connecteur optique standard au format LC.

12. Dispositif réducteur de tension (100) selon l'une quelconque des revendications précédentes, monté dans une structure de montage.

13. Dispositif réducteur de tension (100) selon la revendication 12, dans lequel la structure de montage est l'un d'un panneau de brassage et d'une portion d'entrée de câble d'un boîtier de distribution de télécommunication.
